# EUROPÄISCHE PATENTSCHRIFT

(11) **EP 4 324 315 B1**
(45) Veröffentlichungstag und Bekanntmachung des Hinweises auf die Patenterteilung: **25.11.2026**
(21) Anmeldenummer: 23179425.6
(22) Anmeldetag: 15.06.2023
(51) Int. Cl.: A01B 69/00, A01F 15/08, A01D 43/08

(54) **SCHWADERFASSUNGSVORRICHTUNG**
SWATH ACQUISITION DEVICE
DISPOSITIF DE DÉTECTION D'ANDAIN

(30) Priorität: 16.08.2022 DE 102022120618
(43) Veröffentlichungstag der Anmeldung: 21.02.2024
(73) Patentinhaber: CLAAS E-Systems GmbH, 49201 Dissen (DE)
(72) Erfinder: Töniges, Torben, 33602 Bielefeld (DE); Schröder, Axel, 33332 Gütersloh (DE); Redenius, Jannik, 32361 Pr. Oldendorf (DE); Linke, Stefan, 33378 Rheda-Wiedenbrück (DE)
(74) Vertreter: CLAAS Gruppe

(56) Entgegenhaltungen:
- EP-A1- 1 529 428
- US-A1- 2007 005 208
- US-A1- 2021 246 636

## Beschreibung

Die vorliegende Erfindung betrifft eine Vorrichtung zum Erfassen eines auf einer zu bearbeitenden landwirtschaftlichen Fläche abgelegten Schwades.

Eine solche Vorrichtung ist aus EP 1 630 574 B1, US 2021/246636 A1, US 2007/005208 A1 und EP 1 529 428 A1 bekannt. Sie umfasst einen Laserscanner, der, knapp unter dem Dach einer Fahrerkabine eines landwirtschaftlichen Fahrzeugs montiert, einen Laserstrahl entlang einer nach vorn abschüssigen Ebene emittiert und durch Messen des Abstands zum jeweils nächsten den Laserstrahl reflektierenden Objekts ein Höhenprofil einer vor dem Fahrzeug liegenden Fläche erstellt. Dabei liefert jeder Scan des Laserstrahls entlang der Ebene ein Höhenprofil entlang einer quer zur Fahrtrichtung verlaufenden Linie. Damit ein Schwad sicher erkannt werden kann, muss der höchste Punkt in nacheinander aufgenommenen Höhenprofilen in etwa an derselben Stelle zu finden sein. Unregelmäßigkeiten, die sich aus Fluktuationen des Massenstroms bei der Ablage des Schwades oder aus Unebenheiten des Untergrunds ergeben, können die Schwaderfassung beeinträchtigen.

Um eine sicherere Schwaderfassung zu erreichen, wird vorgeschlagen, eine Vorrichtung zum Erfassen eines auf einer zu bearbeitenden landwirtschaftlichen Fläche abgelegten Schwades mit einer Kamera zum Erzeugen eines Bildes des auf der Fläche abgelegten Schwades und einer Recheneinheit auszustatten, die eingerichtet ist, eine künstliche Intelligenz zur Auswertung des Bildes zu nutzen, wobei die künstliche Intelligenz dazu vorgesehen und eingerichtet ist einen Erntegutschwad in dem Bild zu identifizieren, und wobei die Recheneinheit dazu vorgesehen und eingerichtet ist eine Lage des Erntegutschwades auf der zu bearbeitenden landwirtschaftlichen Fläche zu bestimmen.

Da die künstliche Intelligenz insbesondere an der Oberfläche des Schwades vom darin enthaltenen Material gebildete Mustern auswerten kann, genügen rein zweidimensionale Bildinformationen, wie sie von einer herkömmlichen elektronischen Kamera mit einem zweidimensionalen Bildsensor geliefert werden, dessen Pixel jeweils nur eine Helligkeits- und evtl. Farbtoninformation liefern, nicht aber eine für die Entfernung des auf das Pixelabgebildeten Gegenstands von der Kamera repräsentative Tiefeninformation.

Die künstliche Intelligenz umfasst vorzugsweise ein trainiertes neuronales Netz, insbesondere vom Typ Residual Neural Network, wie etwa DeepLab V3+. Code für derartige Netze ist im Internet, etwa über www.ma-thworks.com verfügbar. Verschiedene Ausgestaltungen dieser Netze unterscheiden sich in der Zahl der Ebenen, in der die Knoten des Netzes angeordnet sind. Für die Zwecke der Erfindung hat sich insbesondere eine Res-net18-Architektur als geeignet erwiesen. Techniken zum Trainieren derartiger neuronaler Netze anhand von Bildern, bei denen die semantischen Klassem einzelner Bildbereiche vorab bekannt sind, sind dem Fachmann geläufig; zum Trainieren eines Netzes zum Erkennen einer Klasse "Schwad" genügt es daher, in ausreichender Menge Bilder bereitzustellen, bei denen bereits bekannt ist, welche Bildbereiche ein Schwad zeigen und welche nicht.

Bildbereiche, die kein Schwad zeigen, können verschiedenen Klassen angehören, wie etwa "Himmel" und "schwadfreie Bodenfläche". Für die Zwecke der Erfindung genügt es, wenn zur zwischen den Klassen "Schwad" einerseits und "Nicht-Schwad" oder "Hintergrund" andererseits unterschieden wird. ;

Es ist nicht notwendig, die semantische Segmentierung jeweils für ein vollständiges Bild der Kamera vorzunehmen. Tatsächlich kann die die Recheneinheit eingerichtet sein, wenigstens einen Teil des Bildes zu extrahieren, dessen Bildinhalt für eine die erfindungsgemäße Vorrichtung mitführende selbstfahrende Maschine in einer begrenzten Zeitspanne erreichbar ist, typischerweise jeweils ein Teil am unteren Rand des Bildes. Für einen Teil des Bildes, dessen Inhalt weiter von der Maschine entfernt sind, kann die Segmentierung aufgeschoben werden, bis die Entfernung verringert und höher auflösende Bildinformation verfügbar ist.

Erfindungsgemäß ist die Recheneinheit zusätzlich eingerichtet, wenigstens einen Teil des Bildes zu extrahieren, der, wenn die Vorrichtung auf einem Fahrzeug installiert ist, einen Teil der zu bearbeitenden landwirtschaftlichen Fläche entlang eines bei Geradeausfahrt extrapolierten Wegs des Fahrzeugs sowie beiderseits des extrapolierten Weges zeigt. So kann sichergestellt werden, dass der Schwad sich nicht nur entlang des extrapolierten Weges sondern auch seitlich von diesem erstreckt, was, wenn die Maschine autonom am Schwad entlangnavigieren soll, eine automatische Festlegung des Weges anhand der Bilder der Kamera ermöglicht.

Für eine automatische Festlegung des Weges ist die Recheneinheit zusätzlich dazu eingerichtet, insbesondere jeweils Punkte eines linken und eines rechten Randes eines in dem extrahierten Bildteil identifizierten Schwades zu ermitteln und einen von dem Fahrzeug zu fahrenden Weg anhand der ermittelten Punkte festzulegen.

Die Festlegung kann insbesondere dadurch erfolgen, dass die Recheneinheit eine Mehrzahl von Mittelpunkten zwischen einander gegenüberliegenden Punkten des linken und des rechten Randes des Schwades ermittelt und eine Ausgleichskurve an die ermittelten Mittelpunkte anpasst.

Anhand der Ausgleichskurve kann die Recheneinheit wenigstens einen Punkt auf der zu bearbeitenden landwirtschaftlichen Fläche und eine Fahrtrichtung auswählen, und eine Lenkung des Fahrzeugs so anzusteuern, dass der Punkt mit der ausgewählten Fahrtrichtung überfahren wird. Typischerweise sollte der ausgewählte Punkt auf der Ausgleichskurve liegen und die ausgewählte Fahrtrichtung tangential zur Fahrtrichtung sein. Indem das Auswählen von Punkt und Fahrtrichtung mit ausreichender Häufigkeit wiederholt wird, kann das Fahrzeug der Ausgleichskurve mit hoher Genauigkeit folgen. Dies schließt nicht aus, dass, die Ausgleichskurve während des Fahrens, insbesondere anhand von im Laufe der Fahrt verfügbar werdender hochauflösender Bildinformation, fortlaufend aktualisiert wird.

Unter Berücksichtigung eines für landwirtschaftliche Fahrzeuge wie etwa eine selbstfahrende Ballenpresse typischen Wendekreises sollte die Recheneinheit den Punkt in einem Abstand vom Fahrzeug zwischen 2 und 10 m auswählen.

Gegenstand der Erfindung ist ferner ein Fahrzeug, insbesondere ein Feldhäcksler oder eine selbstfahrende Ballenpresse, mit einer Vorrichtung zum Erfassen eines Schwades wie oben beschrieben.

Ein Gegenstand der Erfindung ist ein Computerprogramm, das Programmanweisungen umfasst, die bei Ausführung auf einem Computer diesen befähigen, als Recheneinheit in einer Vorrichtung wie oben beschrieben zu arbeiten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines Feldhäckslers;
- Fig. 2: ein von einer Kamera des Feldhäckslers aufgenommenes Bild;
- Fig. 3: das Bild der Fig. 2 nach Durchlaufen einer semantischen Segmentierung und einer Auswertung der Ergebnisse der Segmentierung;
- Fig. 4: ein Zwischenergebnis der Auswertung.

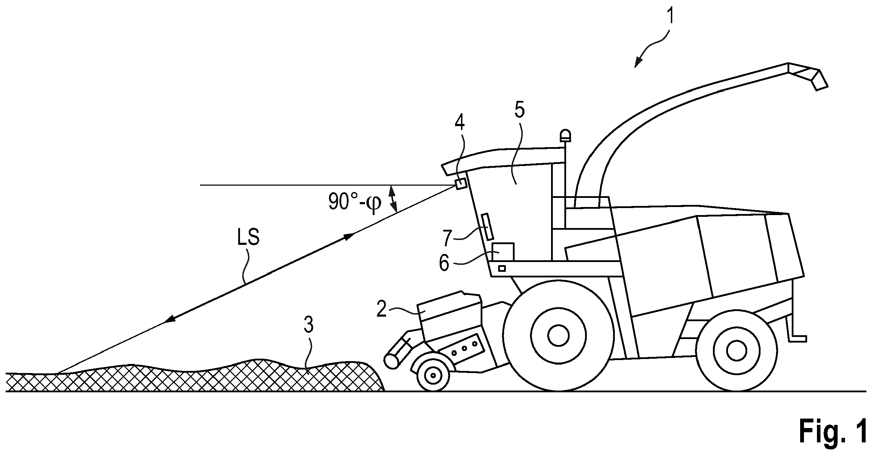

In Fig. 1 ist ein Feldhäcksler 1 mit Pickup 2 als Vorsatzgerät zur Aufnahme von in einem Schwad 3 liegendem Erntegut gezeigt. Eine Kamera 4 ist an der Vorderkante eines Dachs einer Fahrerkabine 5 angebracht, um die vor dem Feldhäcksler 1 liegende Feldfläche mit dem Schwad 3 darauf zu überwachen. Ein Bordrechner 6 ist mit der Kamera 4 verbunden, um von dieser aufgenommene Bilder zu empfangen und mit Hilfe eines neuronalen Netzes semantisch zu segmentieren, d.h. für jedes Pixel zumindest jeweils eines Teils der Bilder zu entscheiden, ob das Pixel zu einem Schwad gehört oder nicht. Bildbereiche, die nicht zu einem Schwad gehören, werden im Folgenden als Hintergrund bezeichnet, unabhängig davon, zu welcher Art von Objekt diese gehören und wie sich die Entfernung dieses Objekts von der Kamera zur Entfernung eines im gleichen Bild sichtbaren Schwades von der Kamera verhält.

Der Bordrechner 6 verwendet für die Segmentierung ein an sich bekanntes Modell vom Typ DeepLabv3+, entwickelt von Google, Inc. insbesondere für Anwendungen zur Erkennung von anderen Verkehrsteilnehmern beim autonomen Fahren im Straßenverkehr. Das Modell verwendet die Technik des Spatial pyramid pooling, um den semantischen Gehalt eines Bildbereichs auch bei unterschiedlichen Bildauflösungen korrekt beurteilen zu können und den Schwad 3 folglich nicht nur in der unmittelbarer Nähe des Feldhäckslers 1 erkennen zu können, wo hochauflösende, eventuell einzelne Pflanzenteile des Schwades auflösende Bildinformation verfügbar ist, sondern auch in größerer Entfernung, in der die Auflösung der Kamera für solche Details nicht mehr ausreicht. Eine ebenfalls implementierte Encoder-Decoder-Struktur des Netzes ermöglicht die Identifizierung scharfer Objektgrenzen im Bild und unterstützt so die Identifizierung einzelner Pflanzenteile und die darauf basierende Einstufung eines Bildbereichs als Schwad oder Hintergrund. Der Encoder verwendet eine Resnet-18-Archi-tektur.

Ein Bildschirm 7 zum Anzeigen von Ergebnissen der Verarbeitung durch den Bordrechner 6 kann in der Fahrerkabine 5 vorgesehen sein.

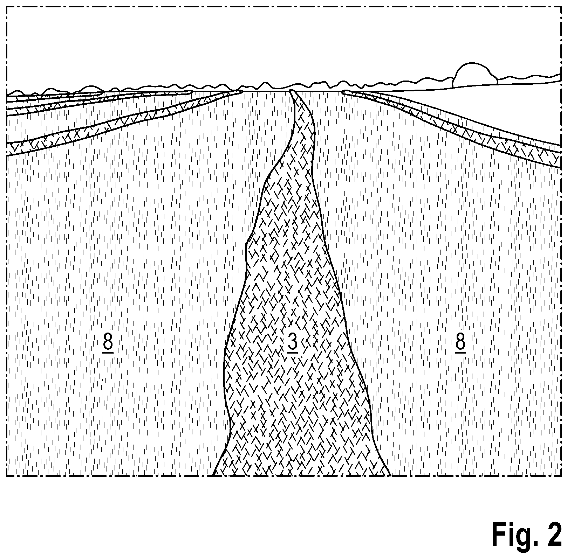

Fig. 2 zeigt exemplarisch ein von der Kamera 4 aufgenommenes Bild einer vor dem Feldhäcksler 1 liegenden Ackerfläche. Die Fläche ist abgeerntet, auf einem Großteil der Fläche bilden die in Reihen aufrecht stehenden Stoppeln ein charakteristisches Oberflächenmuster, das es dem Bordrechner ermöglicht, diese Flächen als nicht zu einem Schwad gehörigen Hintergrund 8 zu identifizieren. Unmittelbar vom Feldhäcksler 1 ausgehend erstreckt sich ein Schwad 3 zum Horizont. In der Figur ist der Schwad 3 schematisch als Muster von kurzen Strichen dargestellt, die entsprechend den im Schwad wahllos durcheinander liegenden Halmen unterschiedlich orientiert sind. In der Realität sind die zufällig orientierten Halme in den Bildern der Kamera 4 nur in der Nähe des Feldhäckslers 1, am unteren Bildrand, erkennbar. In größerer Entfernung von der Kamera 4 werden die Halme in den Bildern nicht mehr aufgelöst, hier ist der Schwad 3 an zufällig verteilten Dunkelzonen erkennbar, in denen die Kamera 4 jeweils in einen schattigen Hohlraum zwischen den Halmen des Schwades blickt.

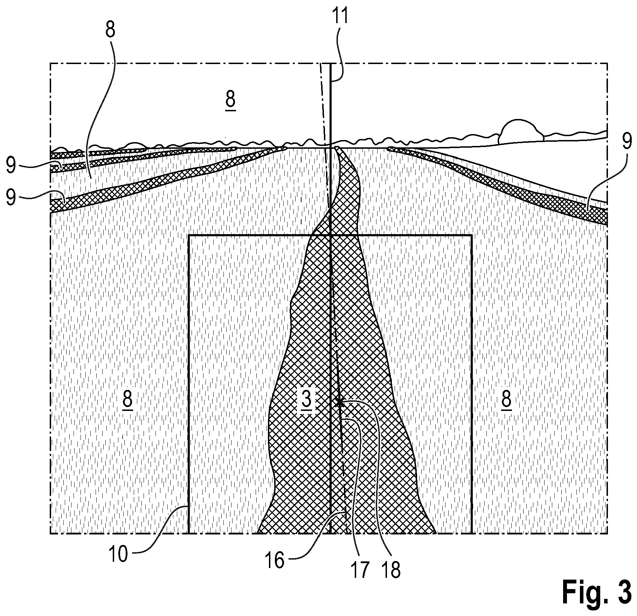

Fig. 3 zeigt das Ergebnis einer Verarbeitung des Bildes durch den Bordrechner 6. Die Ergebnisse einer von dem im Bordrechner 6 implementierten neuronalen Netz durchgeführten semantischen Segmentierung sind hier verdeutlicht, indem als zu einem Schwad 3 gehörig erkannte Bildbereiche kreuzschraffiert dargestellt sind. In der Praxis, wenn das Ergebnis der semantischen Segmentierung auf dem Bildschirm 7 dargestellt wird, kann der Schwad 3 in einer nicht natürlichen Farbe, z. B. einem Rotton dargestellt sein, während als zum Hintergrund 8 gehörig identifizierte Bildteile in ihrer natürlichen Farbe, wie von der Kamera 4 erfasst, gezeigt sind. Die Beibehaltung der natürlichen Farbe im größeren Teil des Bildes erleichtert einem Fahrer das Verständnis des Bildes, wenn dieses auf dem Bildschirm 7 angezeigt wird.

In der Darstellung der Fig. 3 ist die semantische Segmentierung für das gesamte Bild der Kamera durchgeführt worden, es sind mehrere voneinander getrennte Bildbereiche als Schwade 3, 9 markiert, auch solche, die nicht unmittelbar von dem Feldhäcksler 1 liegen. Es liegt auf der Hand, dass Informationen über seitwärts gegen die aktuelle Position des Feldhäckslers 1 versetzte Schwade 9 für ein autonomes Navigieren entlang eines Schwades zumindest dann nicht benötigt werden, wenn ein unmittelbar vor dem Feldhäcksler 1 liegender Schwad 3 sichtbar ist. Im Feldeinsatz kann daher die semantische Analyse zumindest zunächst auf einen Teilbereich 10 des Bildes beschränkt bleiben, der mittig an den unteren Bildrand angrenzt und somit den als nächstes von dem Feldhäcksler 1 befahrenen Teil der Feldfläche zeigt. Wenn durch die semantische Segmentierung in diesem Teilbereich 10 der Schwad 3 identifiziert wird, kann eine Segmentierung des restlichen Bildes unterbleiben; nur wenn kein Schwad gefunden wird, kann es notwendig sein, weitere, an den Bereich 10 angrenzende Bildbereiche zu segmentieren, bis ein Schwad gefunden wird.

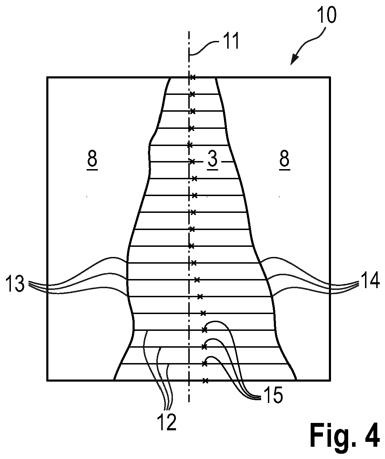

Fig. 4 veranschaulicht die weitere Verarbeitung der Segmentierungsergebnisse anhand einer vergrößerten Darstellung des Teilbereichs 10. Der Schwad 3 und der Hintergrund 8 sind hier jeweils als weiße Flächen dargestellt, Grenzen 20 zwischen ihnen sind als unregelmäßig gekrümmte schwarze Linien gezeichnet. Bei Geradeausfahrt würde sich der Feldhäcksler 1 über die dargestellte Feldfläche entlang einer Linie 11 bewegen, die mittig zwischen seitlichen Rändern des Teilbereichs 10 verläuft. Senkrecht zu dieser Linie konstruiert der Bordrechner eine Vielzahl von Linien 12, und ermittelt Punkte 13, 14, an denen diese Linien 12 die linke und die rechte Grenze des Bildes des Schwades 3 kreuzen, sowie jeweils einen Punkt 15, der mittig zwischen den beiden Kreuzungspunkten 13, 14 liegt.

Im nächsten Schritt berechnet der Bordrechner, z.B. nach dem bekannten Kleinste-Quadrate-Verfahren, ein Ausgleichspolynom durch die Punkte 15. Dabei entspricht die Linie 11 einer Achse, an der das Argument des Polynoms aufgetragen ist, der Wert des Polynoms für ein gegebenes Argument bezeichnet den Abstand eines Punktes des Polynoms von der Linie 11. Das Polynom ist vorzugsweise von ungerader Ordnung, insbesondere von erster Ordnung (also eine Gerade) oder von dritter Ordnung.

Wie in Fig. 4 gezeigt können die Linien 12 im Teilbereich 10 gleichmäßig beabstandet sein. Würde man diese Linien 12 entlang der Blickrichtung der Kamera 4 auf die Ackerfläche projizieren, so ergäbe sich ein mit zunehmender Entfernung von der Kamera 4 zunehmender Abstand zwischen den projizierten Linien. Nah an der Kamera 4 gelegene Teile des Schwades 3 gehen somit - in durchaus erwünschter Weise - mit höherem Gewicht in die Berechnung des Polynoms ein als weit entfernte Bereiche.

Das auf diese Weise berechnete Polynom ist im Anzeigebild der Fig. 3 als gestrichelte Kurve 16 gezeigt. Auf dem Bildschirm 7 genügt es, wenn nur ein kurzer Abschnitt 17 der Kurve 16 dargestellt ist, aus dem wenigstens ein Punkt 18 der Kurve 16 und die Richtung der Kurve 16 an diesem Punkt 18 erkennbar ist. Im Fall der Fig. 3 ist dieser Abschnitt 17 gegen die Linie 11 nach rechts versetzt und läuft nach oben auf die Linie 11 zu. Ein Fahrer kann daher anhand des Anzeigebilds sofort erkennen, dass er, um den Abschnitt 17 abzufahren bzw. den Punkt in der durch den Abschnitt 17 bezeichneten Richtung zu überfahren, den Feldhäcksler zunächst nach rechts und dann wieder auf die Linie 12 zu lenken muss; es liegt auf der Hand, dass auch der Bordrechner entsprechende Rechnungen anstellen kann, um den Feldhäcksler 1 autonom entlang des Abschnitts 17 zu lenken.

Damit ein solches Manöver ohne übermäßige Lenkbewegungen möglich ist, sollte der Abstand des Abschnitts 17 bzw. des Punkts 18 vom Feldhäcksler 1 nicht kleiner sein als der Wendekreisdurchmesser des Feldhäckslers 1, braucht aber auch nicht größer zu sein als ein Vielfaches dieses Durchmessers. Typischerweise beträgt der Abstand zwischen 2 und 10 m.

Indem der Bordrechner die Berechnung des Abschnitts 17 und ein darauf basierendes Ansteuern der Lenkung fortlaufend wiederholt, kann der Schwad 3 auf seiner gesamten Länge autonom abgefahren werden.

### Bezugszeichen

- 1: Feldhäcksler
- 2: Pickup
- 3: Schwad
- 4: Kamera
- 5: Fahrerkabine
- 6: Bordrechner
- 7: Bildschirm
- 8: Hintergrund
- 9: Schwad
- 10: Teilbereich
- 11: Linie
- 12: Linie
- 13: Punkt
- 14: Punkt
- 15: Mittelpunkt
- 16: Kurve
- 17: Abschnitt
- 18: Punkt

## Patentansprüche

1. Vorrichtung zum Erfassen eines auf einer zu bearbeitenden landwirtschaftlichen Fläche abgelegten Schwades (3, 9), ausgestattet mit einer Kamera (4) zum Erzeugen eines Bildes des auf der Fläche abgelegten Schwades (3, 9) und einer Recheneinheit (6), die eingerichtet ist, eine künstliche Intelligenz zur Auswertung des Bildes zu nutzen, wobei die künstliche Intelligenz dazu vorgesehen und eingerichtet ist einen Erntegutschwad (3) in dem Bild zu identifizieren, und wobei die Recheneinheit (6) dazu vorgesehen und eingerichtet ist eine Lage des Erntegutschwades (3) auf der zu bearbeitenden landwirtschaftlichen Fläche zu bestimmen,
**dadurch gekennzeichnet, dass** die Recheneinheit (6) eingerichtet ist, wenigstens einen Teil (10) des Bildes zu extrahieren, der, wenn die Vorrichtung auf einem Fahrzeug (1) installiert ist, einen Teil der zu bearbeitenden landwirtschaftlichen Fläche entlang eines bei Geradeausfahrt extrapolierten Wegs (11) des Fahrzeugs sowie beiderseits des extrapolierten Weges (11) zeigt,
wobei die Recheneinheit (6) eingerichtet ist, Punkte (13, 14) an einem linken und einem rechten Rand eines in dem Teil (10) identifizierten Schwades (3) zu ermitteln und einen von dem Fahrzeug (1) zu fahrenden Weg anhand der ermittelten Punkte (13, 14) festzulegen.

2. Vorrichtung nach Anspruch 1, **dadurch gekennzeichnet, dass** die künstliche Intelligenz ein trainiertes neuronales Netz, insbesondere vom Typ Residual Neural Network, umfasst, wobei das neuronale Netz trainiert ist, um für wenigstens einen Teil des Bildes eine semantische Segmentierung vorzunehmen, die jedem Pixel eine Klasse "Schwad" (3, 9) oder wenigstens eine von der Klasse "Schwad" verschiedene Klasse (8) zuweist.

3. Vorrichtung nach Anspruch 2, **dadurch gekennzeichnet, dass** das neuronale Netz eingerichtet ist, zum semantischen Segmentieren ein Modell der DeepLab-Reihe, insbesondere DeepLab V3+, zu verwenden.

4. Vorrichtung nach einem der vorhergehenden Ansprüche, **dadurch gekennzeichnet, dass** die Recheneinheit (6) eingerichtet ist, zum Festlegen des zu fahrenden Weges eine Mehrzahl von Mittelpunkten (15) zwischen einander gegenüberliegenden Punkten (13, 14) des linken und rechten Randes des Schwades (3) zu ermitteln und eine Ausgleichskurve (16) an die ermittelten Mittelpunkte (15) anzupassen.

5. Vorrichtung nach Anspruch 4, **dadurch gekennzeichnet, dass** die Recheneinheit (6) eingerichtet ist, anhand der Ausgleichskurve (16) wenigstens einen Punkt (18) auf der zu bearbeitenden landwirtschaftlichen Fläche und eine Fahrtrichtung auszuwählen, und eine Lenkung des Fahrzeugs (1) so anzusteuern, dass der Punkt (18) mit der ausgewählten Fahrtrichtung überfahren wird.

6. Vorrichtung nach Anspruch 5, **dadurch gekennzeichnet, dass** die Recheneinheit (6) eingerichtet ist, den Punkt (18) in einem Abstand vom Fahrzeug zwischen 2 und 10 m auszuwählen.

7. Fahrzeug, insbesondere Feldhäcksler oder selbstfahrende Ballenpresse, mit einer Vorrichtung nach einem der vorhergehenden Ansprüche.

8. Computerprogramm, umfassend Programmanweisungen, die bei Ausführung auf einem Computer diesen befähigen, als Recheneinheit in einer Vorrichtung nach einem der Ansprüche 1 bis 5 zu arbeiten.

## Claims

1. Apparatus for detecting a windrow (3, 9) deposited on an agricultural area to be worked, equipped with a camera (4) for generating an image of the windrow (3, 9) deposited on the area and with a computing unit (6) which is configured to use artificial intelligence to evaluate the image, wherein the artificial intelligence is provided and configured to identify a crop windrow (3) in the image, and wherein the computing unit (6) is provided and configured to determine a position of the crop windrow (3) on the agricultural area to be worked,
**characterized in that** the computing unit (6) is configured to extract at least one part (10) of the image which, when the apparatus is installed on a vehicle (1), shows a part of the agricultural area to be worked along a path (11) of the vehicle extrapolated when driving straight ahead and on both sides of the extrapolated path (11),
wherein the computing unit (6) is configured to determine points (13, 14) at a left-hand and a right-hand edge of a windrow (3) identified in the part (10) and to define a path to be travelled by the vehicle (1) on the basis of the determined points (13, 14).

2. Apparatus according to Claim 1, **characterized in that** the artificial intelligence comprises a trained neural network, in particular of the residual neural network type, wherein the neural network is trained to perform a semantic segmentation for at least one part of the image, which semantic segmentation assigns a class "windrow" (3, 9) or at least one class (8) different from the class "windrow" to each pixel.

3. Apparatus according to Claim 2, **characterized in that** the neural network is configured to use a model of the DeepLab series, in particular DeepLab V3+, for the semantic segmentation.

4. Apparatus according to one of the preceding claims, **characterized in that** the computing unit (6) is configured to determine a plurality of centre points (15) between mutually opposite points (13, 14) of the left-hand and right-hand edge of the windrow (3) in order to define the path to be travelled and to adapt a compensation curve (16) to the determined centre points (15).

5. Apparatus according to Claim 4, **characterized in that** the computing unit (6) is configured to select at least one point (18) on the agricultural area to be worked and a direction of travel on the basis of the compensation curve (16), and to control a steering system of the vehicle (1) such that the point (18) is crossed with the selected direction of travel.

6. Apparatus according to Claim 5, **characterized in that** the computing unit (6) is configured to select the point (18) at a distance from the vehicle of between 2 and 10 m.

7. Vehicle, in particular forage harvester or self- propelled baler, having an apparatus according to one of the preceding claims.

8. Computer program comprising program instructions which, when executed on a computer, enable the latter to operate as a computing unit in an apparatus according to one of Claims 1 to 5.

## Revendications

1. Dispositif de détection d'un andain (3, 9) déposé sur une surface agricole à traiter, équipé d'une caméra (4) pour générer une image de l'andain (3, 9) déposé sur la surface, et d'une unité de calcul (6) qui est aménagée pour exploiter une intelligence artificielle pour interpréter l'image, dans lequel l'intelligence artificielle est prévue et aménagée pour identifier un andain de récolte (3) sur l'image, et dans lequel l'unité de calcul (6) est prévue et aménagée pour déterminer une position de l'andain de récolte (3) sur la surface agricole à traiter,
**caractérisé en ce que** l'unité de calcul (6) est aménagée pour extraire au moins une partie (10) de l'image qui, lorsque le dispositif est installé sur un véhicule (1), montre une partie de la surface agricole à traiter le long d'un trajet (11) extrapolé en marche avant du véhicule ainsi que des deux côtés du trajet (11) extrapolé,
dans lequel l'unité de calcul (6) est aménagée pour déterminer des points (13, 14) sur un bord gauche et un bord droit d'un andain (3) identifié dans la partie (10) et pour fixer un trajet à parcourir par le véhicule (1) à l'aide des points (13, 14) déterminés.

2. Dispositif selon la revendication 1, **caractérisé en ce que** l'intelligence artificielle comprend un réseau neuronal entraîné, en particulier du type Residual Neural Network, dans lequel le réseau neuronal est entraîné pour procéder pour au moins une partie de l'image à une segmentation sémantique qui attribue à chaque pixel une classe « andain » (3, 9) ou au moins une classe (8) différente de la classe « andain ».

3. Dispositif selon la revendication 2, **caractérisé en ce que** le réseau neuronal est aménagé pour utiliser pour la segmentation sémantique un modèle de la série DeepLab, en particulier DeepLab V3+.

4. Dispositif selon l'une quelconque des revendications précédentes, **caractérisé en ce que** l'unité de calcul (6) est aménagée pour fixer le trajet à parcourir pour déterminer une pluralité de points médians (15) entre des points (13, 14) opposés du bord gauche et du bord droit de l'andain(3) et pour ajuster une courbe de compensation (16) aux points médians (15) déterminés.

5. Dispositif selon la revendication 4, **caractérisé en ce que** l'unité de calcul (6) est aménagée pour sélectionner à l'aide de la courbe de compensation (16) au moins un point (18) sur la surface agricole à traiter et un sens de la marche, et pour commander une direction du véhicule (1) de façon à passer par le point (18) dans le sens de la marche sélectionné.

6. Dispositif selon la revendication 5, **caractérisé en ce que** l'unité de calcul (6) est aménagée pour sélectionner le point (18) à une distance du véhicule comprise entre 2 et 10 m.

7. Véhicule, en particulier ramasseuse-hacheuse ou presse à balles automotrice, comprenant un dispositif selon l'une quelconque des revendications précédentes.

8. Programme informatique, comprenant des instructions de programme qui, lorsqu'elles sont exécutées par un ordinateur, permettent à celui-ci de fonctionner comme une unité de calcul dans un dispositif selon l'une quelconque des revendications 1 à 5.
